# EUROPEAN PATENT SPECIFICATION

(11) **EP 3 978 984 B1**
(45) Date of publication and mention of the grant of the patent: **17.05.2023**
(21) Application number: 21170305.3
(22) Date of filing: 23.04.2021
(51) Int. Cl.: G02B 21/24, G02B 21/36

(54) **MICROSCOPE**
MIKROSKOP
MICROSCOPE

(43) Date of publication of application: 06.04.2022
(73) Proprietor: Leica Microsystems CMS GmbH, 35578 Wetzlar (DE)
(72) Inventor: SIMMER, Sebastian, 35649 Bischoffen (DE)
(74) Representative: DehnsGermany Partnerschaft von Patentanwälten

(56) References cited:
- WO-A1-2005/030394
- JP-A- 2003 005 079
- US-B2- 9 772 483

## Description

### Field

The present invention is directed to a microscope for examining a sample, the microscope comprising a microscope stage for receiving the sample to be examined and further comprising a microscope housing enclosing the microscope stage. Such microscopes can particularly be used for examination of a sample located in a sample chamber, which is incubated with an incubation atmosphere adapted to the sample. In general, also other uses and applications of such a microscope can be envisaged.

### Background

In the field of microscopic examination of living samples like cells, it is common practice to make use of incubated sample chambers and/or to supply a reagent to the sample before or during examination of the sample. Such reagents comprise fluids, in particular liquids with or without chemically or biologically active substances, e.g. water, water-soluble or fat-soluble or other substances like hormones or medicine in a suitable carrier substance for triggering biological or chemical reactions with the sample or just for preserving the sample. Usually, the sample itself is located in multi-well-plates, Petri dishes or microfluidic systems on a microscope table. Pumps may be used for supplying the reagent to the sample. On the other hand, manual pipetting can be carried out.

Various kinds of containers, like Falcon tubes or Eppendorf tubes or Schott flasks, are used for storing the reagent. The containers are typically located outside the microscope housing, sometimes in a temperature controlled box. In many cases, only small amounts of a reagent need to be injected into a biological sample, especially in case of stimulants, like hormones or medicine drugs. On the other hand, larger amounts of reagent need to be exchanged for example in organ-on-a-chip experiments.

Additionally or alternatively, the sample is examined in an incubation atmosphere which provides best possible conditions to a living sample regarding temperature, humidity and gas composition. While access to the sample chamber is often needed for supplying a reagent to the sample, escape of incubation atmosphere should be limited.

Document JP 2003 005079 A describes a casing of a microscope apparatus with an opening that is closable by a door. The door is biased in closing direction so as to automatically close. Document US 9 772 483 B2 describes a microscope casing having a hinged door for providing access via an opening in the casing. Document WO 2005/03094 A1 describes a climatic chamber suitable for chemical and/or biological samples. Furthermore, in general, the sample handling, particularly exchanging of samples, manipulating samples, supplying reagent to the sample etc., should be facilitated.

### Summary

In view of the above tasks in modern microscopy, especially for examining living samples, there is a need for an improved microscope.

The present invention provides a microscope for microscopic examination of a sample, according to claim 1, the microscope comprising a microscope stage for receiving the sample to be examined and further comprising a microscope housing enclosing the microscope stage, wherein the microscope housing comprises an opening closable by a hinged door which, in an opened state, is configured as a work surface and, in a closed state, forms at least a part of the microscope housing. The hinged door is configured such that the door can be pivoted down in the opened state to form a horizontal work surface which also provides a storage area, a table or shelf. Such a workspace can be used for putting down things like reagent containers, laboratory bottles, pipettes, sample containers like multi-well-plates, Petri dishes and the like. At the same time, opening of the hinged door uncovers an opening in the microscope housing which provides, directly or indirectly, access to the microscope stage, i.e. to the sample chamber and/or to the sample itself. This opening can be dimensioned in a way to provide easy access to the microscope stage, on the one hand, and, on the other hand, especially in case of incubated sample chambers, to minimize disturbances of the sample inside the sample chamber and/or of the incubation atmosphere in the sample chamber. In its closed state, the hinged door forms at least a part of the microscope housing, such that the microscope housing preferably forms a closed entity.

The microscope according to the present invention allows a user to inspect the sample and/or to manipulate the sample through the opening in the microscope housing, and, at the same time, to have a work surface/table/storage area integrated in the microscope housing.

In its opened state, the hinged door provides indirect access to the microscope stage through the opening of the microscope housing. According to the invention, the opening in the microscope housing providing access to the microscope stage is closed by a separate door (as will be explained in more detail below) which itself is covered by closing the hinged door. In the opened state, the hinged door provides access to the microscope stage through a second door arranged in the opening of the microscope housing. Preferably, this second door is a sliding door and/or is at least partially transparent.

According to the invention, opening the first hinged door provides access to the second door which, in its closed state, covers the opening of the microscope housing. The second door can be of a similar (or even the same) size as the first hinged door or, more preferred, can be of a smaller size, e.g. about 0.5, 0.4, 0.3, 0.25 or 0.2 of the size of the first hinged door. A smaller size of the second door ensures that disturbances of the sample and/or of the incubation atmosphere inside the sample chamber are minimized. A sliding door makes possible to uncover only a desired portion of the opening, which is needed for sample handling. An at least partially transparent second door makes it possible to monitor the sample inside the sample chamber on the microscope stage even if the opening is closed.

The embodiment of a first hinged door and a second door may also be called a "double-wall" solution. Still the hinged door, in the closed state, forms a part of the microscope housing and may be embodied as at least a part of a front cover of the microscope housing. The second door located behind the hinged door may be formed in a front panel of the housing serving for opening and closing the opening of the microscope housing. The "double-wall" embodiment will be further described below in connection with the Figures.

In a preferred embodiment, the hinged door is attached to a hinged lid of the microscope housing, which, when in an open state, provides direct access to the microscope stage. In this embodiment, the hinged lid carries the closed hinged door and can be hinged up or down or sideward to provide access to the microscope stage. Preferably, the hinged lid is a part of the microscope housing. In the case of the "double-wall" embodiment, also the second door preferably forms a part of the hinged lid of the microscope housing. In this embodiment, by opening the hinged lid, the user opens a preferably bigger part of the microscope housing compared to an opening of the hinged door or of the second door. Typically, the hinged lid is opened if a user needs access to the interior of the microscope housing, for instance, to adjust optical components and/or the microscope stage. Also, this embodiment will be described in further detail below in connection with the figures.

In a preferred embodiment, the hinged door is mounted to the hinged lid of the microscope housing by a hinge mechanism comprising at least one hinge. Preferably, two hinges are used. Further, it is preferred if the hinge mechanism comprises a stop being configured to stop an opening movement of the hinged door. The opening movement of the hinged door is preferably a hinge down movement such that the stop ensures that the hinged door is opened at an angle of 90° to provide a horizontal work surface.

Furthermore, it is preferred if the hinge mechanism includes a cable mounted to a cable brake configured to damp the opening movement of the hinged door and/or to define an opening angle of the hinged door. The cable can be a steel cable or a cable made of fabric such as nylon. The cable may be biased to provide a resistance against an opening movement of the hinged door. It may also define an opening angle of the hinged door, which is preferably 90°.

In a preferred embodiment, the hinged door comprises a door locking mechanism configured to lock the hinged door in its closed state and to unlock the hinged door upon a user operation. The door locking mechanism - in a simple version - may comprise a magnet or a hook or snap lock. The hinged door, in its closed state, may be hold/locked by magnetic forces or by a latched hook. In order to open the hinged door, a user may simply open the hinged door by gripping the door itself or by manipulating a lever or button for unlocking the door locking mechanism.

In the "double-wall" embodiment described above, the opening of the microscope housing is formed in a front panel of the housing. In this case, it is preferred that the door locking mechanism is configured to lock the hinged door, in its closed state, with the front panel of the housing. In this case, the door locking mechanism, e.g. comprising a magnet, hook and/or snap lock, interacts with the front panel of the housing.

In an embodiment of the present invention, the microscope further comprises illumination optics for illuminating a sample to be examined, the door locking mechanism being operatively coupled to the illumination optics such that an illumination of the sample by the illumination optics can only be started when the hinged door is in the locked closed state. This embodiment is particularly advantageous in case the illumination optics comprises one or more lasers emitting laser light in order to protect a user from such laser light as long as the hinged door is in its opened state. In the latter case, the laser light is automatically switched off.

It is further advantageous if the microscope comprises an internal illumination of the interior of the housing or at least of a part of the housing forming the sample chamber, which internal illumination is automatically switched on when the hinged door is unlocked, or when the hinged door is opened. This enables a user to observe and better inspect the sample or the sample chamber directly or through the opened second door or even through the closed transparent second door.

In a preferred embodiment, where the hinged door is attached to a hinged lid of the microscope housing, as discussed above, the hinged lid comprises a lid interlocking mechanism and the hinged door comprises a separate door interlocking mechanism. The lid interlocking mechanism interacts with the door interlocking mechanism and keeps the hinged door in its closed state if the hinged lid is opened and as long as the hinged lid is in its open state. The lid interlocking mechanism is configured to allow opening of the hinged door only if the hinged lid is in a closed state. In other words, the door interlocking mechanism and the lid interlocking mechanism interact to avoid a simultaneous opening of both the hinged door and the hinged lid and thus ensures safety of operation.

Further advantages and embodiments of the invention will become apparent from the description and the appended figures.

### Short description of the figures

- Figure 1: schematically shows a microscope not being part of the invention,
- Figure 2: schematically shows an embodiment of a microscope according to the present invention,
- Figure 3: shows an embodiment of a microscope according to the present invention having an opened hinged lid.
- Figure 4: shows the embodiment of Figure 3 having a closed hinged lid,
- Figure 5: schematically shows, on a larger scale, an embodiment of a door locking mechanism, interlocking mechanisms, and a cable brake in a microscope according to the present invention, and
- Figure 6: shows a similar view as Figure 3 showing a lid locking mechanism.

### Detailed description

In the following, the figures are described comprehensively, same reference signs designating same or at least structurally identical components.

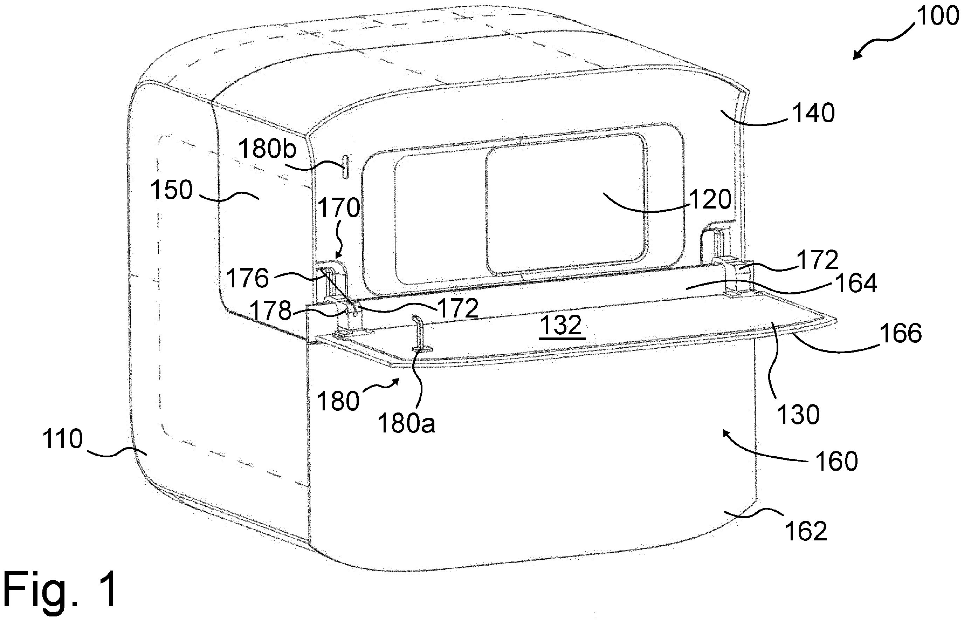

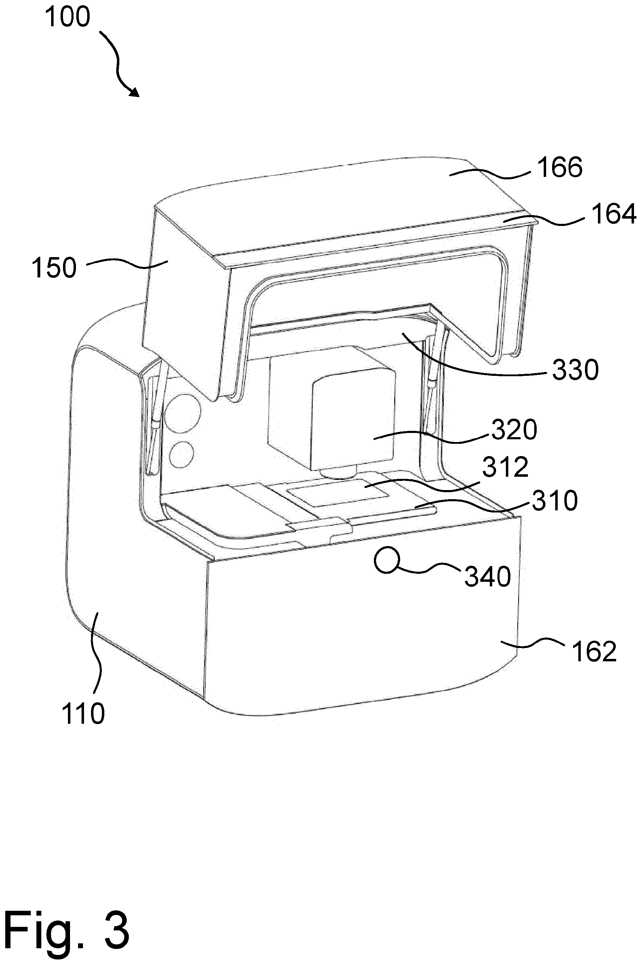

Figure 1 schematically shows a microscope 100, not being part of the invention, for examining a sample, particularly a living sample like cells, the sample particularly being located in an incubated sample chamber. Figure 1 schematically shows a microscope housing 110 which encloses a microscope stage for receiving the sample to be examined and further microscope components like illumination optics for illuminating the sample and imaging optics for imaging the sample (see also Figure 3).

The microscope housing 110 comprises an opening 120 which is closable by a hinged door 130. While in the present embodiment, the size of the opening 120 is much smaller than the size of the hinged door 130, it is appreciated that the size of the opening 120 may be bigger and may even be comparable with the size of the hinged door 130. However, especially in case of an incubated sample chamber, it is preferred to have an opening size of around 0.25 or less of the size of the hinged door. As the opening 120 provides access to the sample chamber and the microscope stage, a small opening 120 ensures that disturbances of the sample itself and/or of the sample chamber incubation atmosphere can be minimized. For ease of illustration, no microscope components which may be visible through the opening 120 are depicted in Figure 1. In this respect, reference is made to Figure 3.

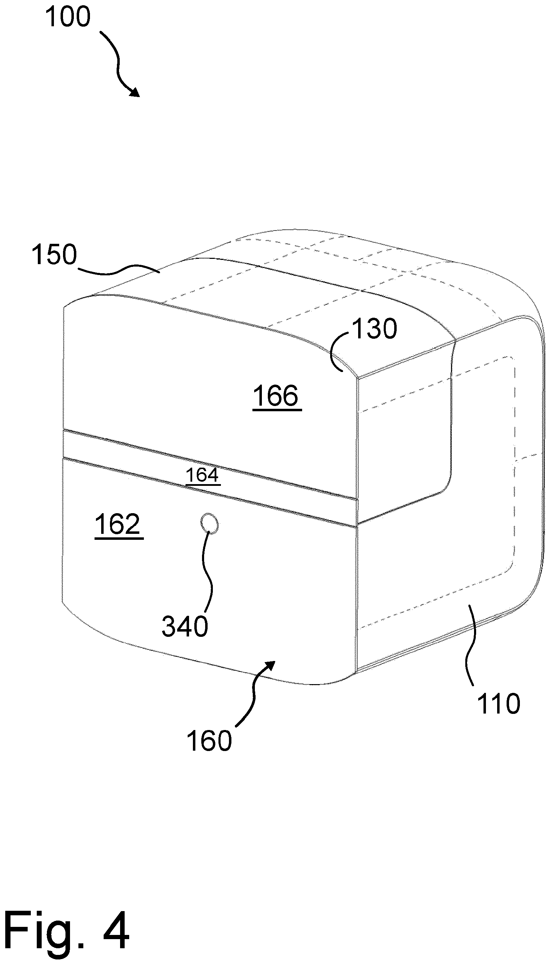

Figure 1 shows the hinged door 130 in an opened state, which door is configured as a work surface 132. Figure 4 shows the hinged door 130 in a closed state forming a part of the microscope housing 110.

In its opened state, the hinged door 130, more precisely the inner surface of the hinged door 130, is configured as a work surface providing a workspace which can be used for putting down reagent containers, laboratory bottles, pipettes, sample containers like multi-well-plates, Petri dishes and the like. It is preferred to limit the maximum load of the work surface 132 to about 5 or 4 kg, more preferred to about 3 or 2 kg. This concept allows a user to inspect the sample inside the microscope housing 110 and/or to manipulate the sample through the opening 120 while being able to use the work surface as a workspace/table/storage area without the need to use an external table or bench as the work surface 132 is integrated in the microscope housing 110.

As can be seen from Figure 1, the opening 120 is formed in a front panel 140 of the housing 110. In such a construction, the hinged door 130 may forms part of a front cover 160 of the microscope 100. Figure 1 shows three different parts of the front cover 160, namely an lower front cover 162, a medium front cover 164, and an upper front cover 166. In its closed state, the hinged door 130 forms a part of the microscope housing by forming the upper front cover 166 as shown in Figure 4.

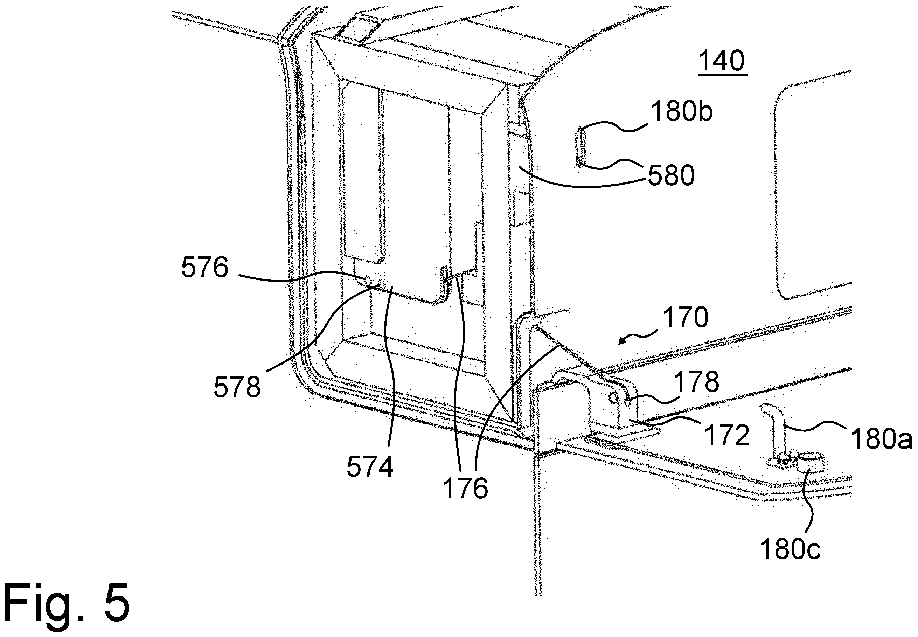

Figure 1 also shows a hinged lid 150 which will be described in more detail in connection with the embodiment of Figure 3. Further, Figure 1 shows a hinge mechanism 170 for mounting the hinged door 130 to the microscope housing 110. The hinge mechanism 170 comprises at least one hinge 172, in the present embodiment two hinges 172. The hinge mechanism 170 further comprises a cable 176 mounted to a cable brake (see Figure 5). As shown in Figure 1, a cable 176 is connected by a cable holder 178 to one of the hinges 172. The cable brake which will be further described in connection with Figure 5 serves the purpose of damping the opening movement of the hinged door 130 and/or to define an opening angle of the hinged door 130. As can be seen from Figure 1, the opening angle should be essentially or exactly 90°.

The hinged door 130 further comprises a door locking mechanism 180 configured to lock the hinged door 130 in its closed state and to unlock the hinged door upon a user operation. To this end, a hook 180a is provided which engages with a corresponding opening 180b to lock the hinged door 130. Alternatively (or additionally) a magnet may be provided, which interacts with the front panel 140 to keep the door 130 in a closed state. An interlocking mechanism between the door and the lid will be described in further detail in connection with Figure 5.

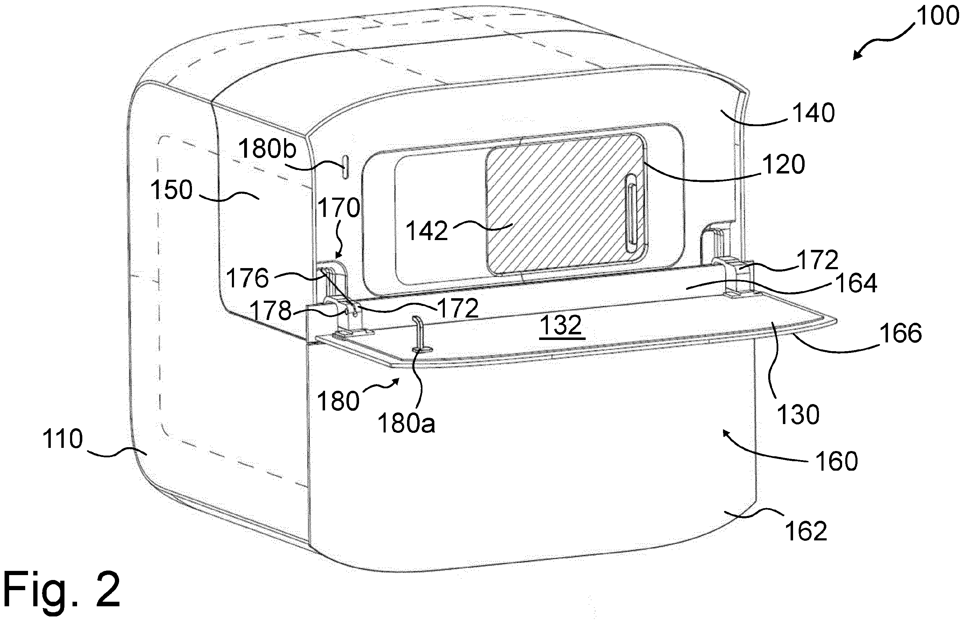

Figure 2 schematically shows an embodiment of a microscope according to the present invention, which is very similar to the one of Figure 1. Therefore, in order to avoid repetitions, reference is made to the description of Figure 1 and only the differences to the embodiment of Figure 1 are described in the following.

As can be seen from Figure 2, the opening 120 in the microscope housing 110 is covered by a second door 142 which is configured as a sliding door 142 such that the opening 120 can be uncovered by sliding the door 142 to the left. Having a second door 142 is especially useful when examining living cells in an incubated sample chamber. Loss of incubation atmosphere can be minimized. Only a part of the opening 120 can be opened which is necessary to exchange a sample or to manipulate a sample inside the microscope housing 110. The second door 142 is preferably made of an at least partially transparent material such that a user can inspect the sample or the interior of the microscope housing 110 even if the door 142 is closed.

Regarding other features, options and components of the microscope 100 shown in Figure 2, reference is made to the description of Figure 1.

Figure 3 schematically shows a microscope 100 according to the present invention, embodiments of which having been discussed before, with an opened hinged lid 150. By opening the hinged lid 150, access to the interior of the microscope housing 110, in this embodiment to the upper part of the interior, is provided. Thus, a user can freely inspect or adjust any components inside the upper part of the microscope housing 110, which would otherwise be covered by the lid 150. In the embodiment shown, a user has access to e.g. an internal illumination 330, illumination optics 320, the microscope stage 310 and the sample 312. At the outside of the housing 110, at the front cover 162, a button 340 is provided for unlocking the hinged lid 150 before opening it.

As can be seen from Figure 3, the microscope 100 is a transmitted-light microscope having imaging optics beneath the microscope stage 310 in a lower part of the microscope housing 110.

Figure 4 schematically shows the microscope 100 of Figure 3 with the hinged lid 150 in its closed state. As already indicated above, the front cover 160 of the microscope 100 comprises three parts 162, 164, 166. In its closed state, the microscope 100 resembles a cube. In this embodiment, the hinged door 130 can be opened by simply grabbing the hinged door 130 and pulling it in its opened state.

In the following, the door locking mechanism 180 and an interlocking mechanism 580 and the hinge mechanism 170 are explained in more detail in connection with Figure 5.

The hinge mechanism 170 has already been described in connection with Figure 1. Figure 5 shows this mechanism in more detail. Cable 176 is clamped between the cable holder 178 and a cable brake 574. While the cable is fixed by cable holder 178 in the hinge 172, the cable brake 574 allows to damp the opening movement of the hinged door 130 and to adjust a corresponding resistance by adjustment screw 578 and to define an opening angle of the hinged door 130 by adjusting an opening angle adjustment screw 576.

In the embodiment shown in Figure 5, the door locking mechanism 180 is configured as a door interlocking mechanism 180a, 180b for enabling an interlocking engagement with a lid interlocking mechanism 580. The hinged lid 150 comprises the lid interlocking mechanism 580 which interacts with the door interlocking mechanism 180a, 180b and keeps the hinged door 130 in its closed state if the hinged lid 150 is opened and as long as the hinged lid is in its open state. The lid interlocking mechanism 580 is configured to allow opening of the hinged door 130 only if the hinged lid 150 is in a closed state. In other words, the door interlocking mechanism 180a, 180b and the lid interlocking mechanism 580 interact to avoid a simultaneous opening of both the hinged door 130 and the hinged lid 150 and thus ensure safety of operation.

Additionally, the hinged door 130, at its inner side, comprises a magnet 180c for holding the hinged door 130 in its closed state by magnetic forces to the front panel 140.

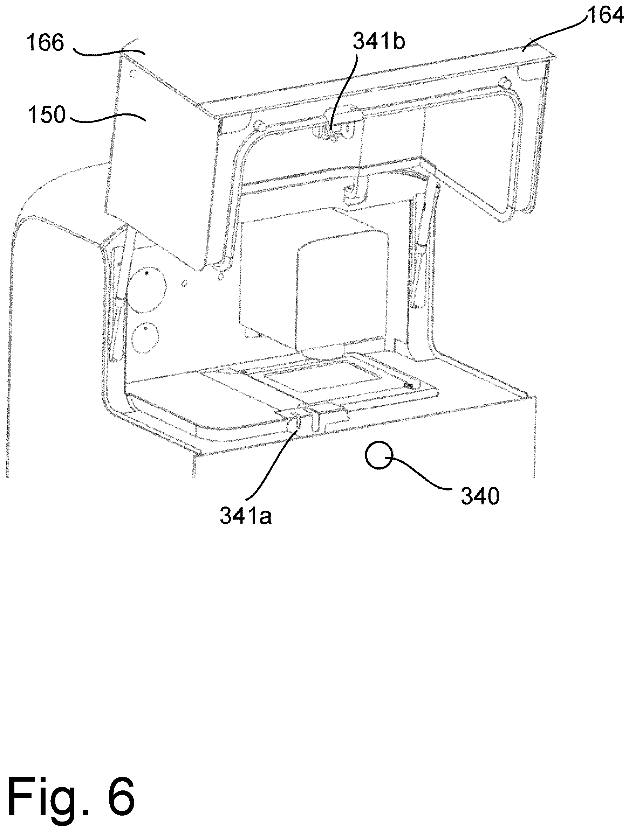

The lid interlocking mechanism 580 uses the hook 180a of the door interlocking mechanism 180a, 180b for locking the door 130 to the lid 150 as soon as the lid 150 is opened by operating the button 340 (see also Figure 6).

On the other hand, if the hinged door 130 is opened, which is only possible if the hinged lid 150 is closed, hook 180a is disengaged from the lid interlocking mechanism 580 such that the corresponding switching element of the interlocking mechanism 580 is closed. This results in a blocking of the hinged lid 150. In this way, a simultaneous opening of the hinged door 130 and the hinged lid 150 can be avoided and safety of operation can be ensured.

Figure 6 shows a similar view as Figure 3 for illustrating the lid locking mechanism 341a, 341b in more detail. In a closed state of the lid 150, the locking parts 341a and 341b interlock with each other for locking the lid 150 in its closed state. By operating/pushing the button 340, the locking parts 341a and 341b are released and the hinged lid 150 can be opened.

### List of reference signs

- 100: microscope
- 110: microscope housing
- 120: opening
- 130: hinged door
- 132: work surface
- 140: front panel
- 142: second door
- 150: hinged lid
- 160: front cover
- 162: lower front cover
- 164: medium front cover
- 166: upper front cover
- 170: hinge mechanism
- 172: hinge
- 176: cable
- 178: cable holder
- 180: door locking mechanism
- 180a: hook, switching element
- 180b: opening
- 180c: magnet

- 310: microscope stage
- 312: sample
- 320: illumination optics
- 330: internal illumination
- 340: button
- 341a, 341b: locking parts of lid locking mechanism

- 574: cable brake
- 576: opening angle adjustment
- 578: resistance adjustment
- 580: lid interlocking mechanism

## Claims

1. A microscope (100) for examining a sample (312), the microscope (100) comprising a microscope stage (310) for receiving the sample (312) to be examined and further comprising a microscope housing (110) enclosing the microscope stage (310),
wherein the microscope housing (110) comprises an opening (120) and a hinged door (130), wherein the opening (120) is closable by the hinged door (130),
wherein the hinged door (130) is configured to be pivoted down in an opened state to form a horizontal work surface (132), wherein, in the opened state, an inner surface of the hinged door (130) is configured as the work surface (132) and
wherein the hinged door (130), in a closed state, forms at least a part of the microscope housing (110),
**characterized in that** the microscope housing (110) comprises a second door (142) arranged in the opening (120) of the microscope housing (110), wherein, in the opened state, the hinged door (130) provides access to the microscope stage (310) through the second door (142).

2. The microscope (100) according to claim 1, wherein the second door (142) is a sliding door.

3. The microscope (100) according to any one of the preceding claims, wherein the hinged door (130) is attached to a hinged lid (150) of the microscope housing (110), which, in an opened state, provides access to the microscope stage (310), wherein the hinged door (130) is mounted to the hinged lid (150) of the microscope housing (110) by a hinge mechanism (170) of the microscope (100) comprising at least one hinge (172).

4. The microscope (100) according to claim 3, wherein the opening (120) including the second door (142) forms a part of the hinged lid (150) of the microscope housing (110).

5. The microscope (100) according to claim 3 or 4, wherein the hinge mechanism (170) comprises a stop being configured to stop an opening movement of the hinged door (130).

6. The microscope (100) according to claim 5, comprising a cable brake (574), wherein the hinge mechanism (170) includes a cable (176) mounted to the cable brake (574) configured to damp the opening movement of the hinged door (130) and/or to define an opening angle of the hinged door (130).

7. The microscope (100) according to any one of the preceding claims, wherein the hinged door (130) comprises a door locking mechanism (180) configured to lock the hinged door (130) in its closed state and to unlock the hinged door (130) upon a user operation.

8. The microscope (100) according to claim 7, wherein the opening (120) is formed in a front panel (140) of the microscope housing (110), and wherein the door locking mechanism (180) is configured to lock the hinged door (130), in its closed state, with the front panel (140).

9. The microscope (100) according to claim 8, said microscope (100) further comprising illumination optics (320) for illuminating the sample (312) to be examined, wherein the door locking mechanism (180) is operatively coupled to the illumination optics (320) such that an illumination of the sample (312) by the illumination optics (320) can only be started when the hinged door (130) is locked with the front panel, in its closed state.

10. The microscope (100) according to any one of claims 7 to 9, said microscope (100) further comprising an internal illumination (330) of the interior of the microscope housing (110), which is configured to automatically be switched on when the hinged door (130) is unlocked or opened.

11. The microscope (100) according to any one of claims 7 to 10 and according to claim 3, wherein the hinged lid (150) of the microscope housing (110) comprises a lid interlocking mechanism (580), and the door locking mechanism (180) is configured as a door interlocking mechanism (180a, 180b), the lid interlocking mechanism and the door interlocking mechanism being configured to lock the hinged door (130) in its closed state if the hinged lid (150) is opened, and to allow an opening of the hinged door (130) only if the hinged lid (150) is in a closed state.

## Patentansprüche

1. Mikroskop (100) zum Untersuchen einer Probe (312), wobei das Mikroskop (100) einen Mikroskoptisch (310) zur Aufnahme der zu untersuchenden Probe (312) und ferner ein Mikroskopgehäuse (110) umfasst, das den Mikroskoptisch (310) umschließt,
wobei das Mikroskopgehäuse (110) eine Öffnung (120) und eine schwenkbare Tür (130) aufweist, wobei die Öffnung (120) durch die schwenkbare Tür (130) verschließbar ist,
wobei die schwenkbare Tür (130) so konfiguriert ist, dass sie in einem geöffneten Zustand nach unten geschwenkt werden kann, um eine horizontale Arbeitsfläche (132) zu bilden, wobei in dem geöffneten Zustand eine Innenfläche der schwenkbaren Tür (130) als die Arbeitsfläche (132) konfiguriert ist und
wobei die schwenkbare Tür (130) in geschlossenem Zustand zumindest einen Teil des Mikroskopgehäuses (110) bildet,
**dadurch gekennzeichnet, dass** das Mikroskopgehäuse (110) eine zweite Tür (142) umfasst, die in der Öffnung (120) des Mikroskopgehäuses (110) angeordnet ist, wobei die schwenkbare Tür (130) im geöffneten Zustand Zugang zum Mikroskoptisch (310) durch die zweite Tür (142) ermöglicht.

2. Mikroskop (100) nach Anspruch 1, wobei die zweite Tür (142) eine Schiebetür ist.

3. Mikroskop (100) nach einem der vorhergehenden Ansprüche, wobei die schwenkbare Tür (130) an einem schwenkbaren Deckel (150) des Mikroskopgehäuses (110) befestigt ist, der in einem geöffneten Zustand Zugang zum Mikroskoptisch (310) bietet, wobei die schwenkbare Tür (130) an dem schwenkbaren Deckel (150) des Mikroskopgehäuses (110) durch einen Scharniermechanismus (170) des Mikroskops (100) befestigt ist, der mindestens ein Scharnier (172) umfasst.

4. Mikroskop (100) nach Anspruch 3, wobei die Öffnung (120) einschließlich der zweiten Tür (142) einen Teil des schwenkbaren Deckels (150) des Mikroskopgehäuses (110) bildet.

5. Mikroskop (100) nach Anspruch 3 oder 4, wobei der Scharniermechanismus (170) einen Anschlag umfasst, der so konfiguriert ist, dass er eine Öffnungsbewegung der schwenkbaren Tür (130) stoppt.

6. Mikroskop (100) nach Anspruch 5, das eine Seilbremse (574) umfasst, wobei der Scharniermechanismus (170) ein an der Seilbremse (574) angebrachtes Seil (176) umfasst, das so konfiguriert ist, dass es die Öffnungsbewegung der Scharniertür (130) dämpft und/oder einen Öffnungswinkel der Scharniertür (130) definiert.

7. Mikroskop (100) nach einem der vorhergehenden Ansprüche, wobei die schwenkbare Tür (130) einen Türverschlussmechanismus (180) umfasst, der so konfiguriert ist, dass er die schwenkbare Tür (130) in ihrem geschlossenen Zustand verriegelt und die schwenkbare Tür (130) bei einer Benutzerbedienung entriegelt.

8. Mikroskop (100) nach Anspruch 7, wobei die Öffnung (120) in einer Frontplatte (140) des Mikroskopgehäuses (110) ausgebildet ist, und wobei der Türverschlussmechanismus (180) so konfiguriert ist, dass er die schwenkbare Tür (130) in ihrem geschlossenen Zustand mit der Frontplatte (140) verriegelt.

9. Mikroskop (100) nach Anspruch 8, wobei das Mikroskop (100) ferner eine Beleuchtungsoptik (320) zum Beleuchten der zu untersuchenden Probe (312) umfasst, wobei der Türverschlussmechanismus (180) funktionell mit der Beleuchtungsoptik (320) gekoppelt ist, so dass eine Beleuchtung der Probe (312) durch die Beleuchtungsoptik (320) nur gestartet werden kann, wenn die schwenkbare Tür (130) mit der Frontplatte in ihrem geschlossenen Zustand verriegelt ist.

10. Mikroskop (100) nach einem der Ansprüche 7 bis 9, wobei das Mikroskop (100) ferner eine Innenbeleuchtung (330) des Innenraums des Gehäuses (110) des Mikroskops umfasst, die so konfiguriert ist, dass sie automatisch eingeschaltet wird, wenn die schwenkbare Tür (130) entriegelt oder geöffnet wird.

11. Mikroskop (100) nach einem der Ansprüche 7 bis 10 und nach Anspruch 3, wobei der schwenkbare Deckel (150) des Mikroskopgehäuses (110) einen Deckelverriegelungsmechanismus (580) umfasst, und der Türverschlussmechanismus (180) als Türverriegelungsmechanismus (180a, 180b) konfiguriert ist, wobei der Deckelverriegelungsmechanismus und der Türverriegelungsmechanismus konfiguriert sind, um die schwenkbare Tür (130) in ihrem geschlossenen Zustand zu verriegeln, wenn der schwenkbare Deckel (150) geöffnet wird, und um ein Öffnen der schwenkbaren Tür (130) nur zu erlauben, wenn der schwenkbare Deckel (150) in einem geschlossenen Zustand ist.

## Revendications

1. Microscope (100) pour l'examen d'un échantillon (312), le microscope (100) comprenant une platine de microscope (310) pour recevoir l'échantillon (312) à examiner et comprenant en outre un boîtier de microscope (110) renfermant la platine de microscope (310),
le boîtier du microscope (110) comprend une ouverture (120) et une porte à charnières (130), l'ouverture (120) pouvant être fermée par la porte à charnières (130),
dans lequel la porte à charnières (130) est configurée pour être pivotée vers le bas dans un état ouvert pour former une surface de travail horizontale (132), dans lequel, dans l'état ouvert, une surface intérieure de la porte à charnières (130) est configurée comme la surface de travail (132) et
dans lequel la porte à charnière (130), à l'état fermé, forme au moins une partie du boîtier du microscope (110),
**caractérisé par le fait que** le boîtier du microscope (110) comprend une deuxième porte (142) disposée dans l'ouverture (120) du boîtier du microscope (110), dans laquelle, à l'état ouvert, la porte à charnières (130) permet d'accéder à la platine du microscope (310) à travers la deuxième porte (142).

2. Le microscope (100) selon la revendication 1, dans lequel la seconde porte (142) est une porte coulissante.

3. Le microscope (100) selon l'une des revendications précédentes, dans lequel la porte à charnière (130) est fixée à un couvercle à charnière (150) du boîtier du microscope (110), qui, dans un état ouvert, donne accès à la platine du microscope (310), dans lequel la porte à charnière (130) est montée sur le couvercle à charnière (150) du boîtier du microscope (110) par un mécanisme de charnière (170) du microscope (100) comprenant au moins une charnière (172).

4. Le microscope (100) selon la revendication 3, dans lequel l'ouverture (120) comprenant la seconde porte (142) fait partie du couvercle à charnière (150) du boîtier du microscope (110).

5. Le microscope (100) selon la revendication 3 ou 4, dans lequel le mécanisme de charnière (170) comprend une butée configurée pour arrêter un mouvement d'ouverture de la porte à charnière (130).

6. Le microscope (100) selon la revendication 5, comprenant un frein à câble (574), dans lequel le mécanisme de charnière (170) comprend un câble (176) monté sur le frein à câble (574) configuré pour amortir le mouvement d'ouverture de la porte à charnière (130) et/ou pour définir un angle d'ouverture de la porte à charnière (130).

7. Le microscope (100) selon l'une des revendications précédentes, dans lequel la porte à charnière (130) comprend un mécanisme de fermeture de porte (180) configuré pour verrouiller la porte à charnière (130) dans son état fermé et pour déverrouiller la porte à charnière (130) à la suite d'une opération de l'utilisateur.

8. Le microscope (100) selon la revendication 7, dans lequel l'ouverture (120) est formée dans un panneau avant (140) du boîtier du microscope (110), et dans lequel le mécanisme de fermeture de la porte (180) est configuré pour verrouiller la porte à charnière (130), dans son état fermé, avec le panneau avant (140).

9. Le microscope (100) selon la revendication 8, ledit microscope (100) comprenant en outre des optiques d'éclairage (320) pour éclairer l'échantillon (312) à examiner, dans lequel le mécanisme de fermeture de la porte (180) est couplé de manière opérationnelle aux optiques d'éclairage (320) de sorte que l'éclairage de l'échantillon (312) par les optiques d'éclairage (320) ne peut commencer que lorsque la porte à charnière (130) est verrouillée avec le panneau avant, à l'état fermé.

10. Le microscope (100) selon l'une des revendications 7 à 9, ledit microscope (100) comprenant en outre un éclairage interne (330) de l'intérieur du boîtier du microscope (110), configuré pour s'allumer automatiquement lorsque la porte à charnières (130) est déverrouillée ou ouverte.

11. Le microscope (100) selon l'une quelconque des revendications 7 à 10 et selon la revendication 3, dans lequel le couvercle articulé (150) du boîtier du microscope (110) comprend un mécanisme de verrouillage du couvercle (580), et le mécanisme de fermeture de la porte (180) est configuré comme un mécanisme de verrouillage de la porte (180a, 180b), le mécanisme de verrouillage du couvercle et le mécanisme de verrouillage de la porte étant configurés pour verrouiller la porte à charnière (130) dans son état fermé si le couvercle à charnière (150) est ouvert, et pour permettre l'ouverture de la porte à charnière (130) uniquement si le couvercle à charnière (150) est dans un état fermé.
